(19) Europäisches Patentamt / European Patent Office / Office européen des brevets

(11) **EP 3 211 228 B1**

(12) **EUROPEAN PATENT SPECIFICATION**

(45) Date of publication and mention
of the grant of the patent:
**08.07.2020 Bulletin 2020/28**

(51) Int Cl.:
*F04B 1/04* (2020.01)     *F04B 1/053* (2020.01)
*F04B 53/14* (2006.01)

(21) Application number: **17152398.8**

(22) Date of filing: **20.01.2017**

(54) **HYDRAULIC MACHINE AND WIND TURBINE POWER GENERATING APPARATUS**

HYDRAULIKMASCHINE UND WINDTURBINENSTROMERZEUGUNGSVORRICHTUNG

MACHINE HYDRAULIQUE ET APPAREIL DE GÉNÉRATION D'ÉNERGIE ÉOLIENNE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.02.2016 JP 2016035550**

(43) Date of publication of application:
**30.08.2017 Bulletin 2017/35**

(73) Proprietor: **Mitsubishi Heavy Industries, Ltd.**
**Tokyo 108-8215 (JP)**

(72) Inventor: **Ochiai, Hiroyasu**
**Tokyo, 108-8215 (JP)**

(74) Representative: **Henkel & Partner mbB**
**Patentanwaltskanzlei, Rechtsanwaltskanzlei**
**Maximiliansplatz 21**
**80333 München (DE)**

(56) References cited:
WO-A1-90/02867          CH-A5- 629 286
DE-A1-102009 011 224     JP-A- H09 159 026
JP-A- 2012 154 260       JP-B2- 2 521 481
US-A- 5 079 994

**Description**

TECHNICAL FIELD

The present disclosure relates to a hydraulic machine including a piston to which a piston ring is mounted, and a wind turbine power generating apparatus.

BACKGROUND ART

Typical hydraulic machines include a radial-piston type hydraulic machine provided with cylinders disposed along the radial direction of the hydraulic machine and pistons configured to reciprocate inside the cylinders. A radial-piston type hydraulic machine is used for a wide range of purposes including a hydraulic transmission of a wind turbine power generating apparatus.

For instance, EP 2765310 A discloses a radial-piston type hydraulic machine provided with a plurality of cylinders and pistons arranged in a radial fashion around an eccentric cam. In this hydraulic machine, pistons tilt periodically in accordance with rotation of the eccentric cam.

US 5079994 A discloses a radial piston machine having a cylinder block including cylinder bores in which a piston is reciprocable. The piston has a spherical piston head and a piston groove arranged along the biggest diameter of the piston head. Further, the piston head has a deformable slotted piston ring inserted into the piston groove, wherein the piston ring is crowned in a reign of its biggest diameter.

JP 2521481 B2 discloses a hydraulic piston pump motor having a piston member including a piston having a spherical outer peripheral surface and a connection rod. A slot is formed on the peripheral outer surface of the piston. The slot is equipped with an elastically deformable piston ring which has a spherical outer surface.

JP 2012-154260 A discloses a compressor device including a main body. The main body includes a cylinder in which a piston head is reciprocable driven by a piston rod having one end connected to a crank. An elastically deformable ring seal is attached to the piston head.

CH 629286 A5 discloses an engine according to the preamble of claim 1, having a tilting piston comprising a cylinder, a cam and a piston ring provided on the piston so as to be in slide contact with the inner peripheral surface of the cylinder. Further, the hydraulic machine comprises a biasing member configured to push the piston ring outward in the radial direction of the piston, wherein the biasing member is arranged so as to completely surround the piston.

SUMMARY

Meanwhile, when a piston tilts with respect to the axial direction of a cylinder in accordance with rotation of a cam, a side force may be generated from the piston to act on the inner peripheral surface of the cylinder, and the side force may impede smooth operation of the hydraulic machine.

In EP 2765310 A, although side forces are reduced by making the cylinders capable of tilting with the pistons, the structure of the hydraulic machine is complex due to the necessity to form ball-shaped bearings in a cylinder block, for instance.

In view of the above issues, an object of some embodiments of the present invention is to provide a hydraulic machine and a wind turbine power generating apparatus whereby it is possible to appropriately reduce side forces with a simple configuration.

(1) A hydraulic machine according to the present invention comprises the features of claim 1. The hydraulic machine inter alia includes a cylinder disposed along a radial direction of the hydraulic machine; a piston including a piston head having an outer peripheral surface curved in a cross section taken along an axial direction of the cylinder, the piston being configured to reciprocate inside the cylinder; a cam configured to engage with a root end portion of the piston and to rotate in connection with a reciprocating motion of the piston; and a piston ring disposed on the outer peripheral surface of the piston head so as to be in slide contact with an inner peripheral surface of the cylinder. A seal line is formed between the piston head and the cylinder by the piston ring, and an angle formed by the seal line with a plane orthogonal to the axial direction of the cylinder is variable in accordance with tilting of the piston. With the above configuration (1), the piston ring is configured such that the tilt angle formed by the seal line between the piston head and the cylinder formed by the piston ring with the plane orthogonal to the axial direction of the cylinder changes in accordance with tilting of the piston. Thus, with the seal line being inclined in accordance with tilting of the piston, it is possible to bring the direction of a force applied to the piston head due to the hydraulic pressure in a working chamber closer to the direction of a force transmitted to the piston head from the cam. In this way, it is possible to reduce a side force from the piston applied to the inner peripheral surface of the cylinder, and to realize smooth operation of the hydraulic machine.

(2) In some embodiments, in the above configuration (1), the piston ring has a perimeter longer than a perimeter of the inner peripheral surface of the cylinder.

The perimeter of the seal line desirable to reduce a side force upon tilting of the piston may be longer than the perimeter of the inner peripheral surface of the cylinder.

In this regard, with the above configuration (2), the perimeter of the piston ring is longer than the perimeter of the inner peripheral surface of the cylinder, and thereby it is possible to seal a gap between the outer peripheral surface of the piston and the inner peripheral surface of the cylinder with the piston ring appropriately upon tilting of the piston.

(3) In some embodiments, in the above configuration (2), a perimeter L of the piston ring in a natural state satisfies a relationship $0.99L^* \leq L \leq 1.2L^*$, where R is an inner diameter of the cylinder, $\theta_{max}$ is a maximum tilt angle of the piston with respect to the axial direction, and $L^*$ is a reference perimeter expressed by following expression (1).

$$L^* = \pi R \times \left(1 + \frac{1}{\cos\theta_{max}}\right) \times \left(1 + \frac{3\left(\frac{\frac{1}{\cos\theta_{max}}-1}{\frac{1}{\cos\theta_{max}}+1}\right)^2}{10 + \sqrt{4 - 3\left(\frac{\frac{1}{\cos\theta_{max}}-1}{\frac{1}{\cos\theta_{max}}+1}\right)^2}}\right) \qquad (1)$$

In a state where the piston is tilting the most, when the seal line is inclined so as not to generate a side force, the seal line has an oval shape, and the perimeter of the seal line is expressed by $L^*$. Thus, when the piston is tilting the most, it is desirable for the piston ring to have a perimeter close to $L^*$, in terms of maintenance of the sealing performance.

In this regard, with the above configuration (3), the perimeter L of the piston ring in a natural state is set to 0.99L or more, and thereby it is possible to seal a gap between the piston and the cylinder appropriately even if the seal line is inclined in response to tilting of the piston.

Furthermore, as in the above configuration (3), with the perimeter L of the piston ring in a natural state being set to $1.2L^*$ or less, it is possible to prevent excessive contraction of the piston ring while the piston is not tilting, to suppress wear of the piston ring.

(4) In some embodiments, in any of the above configurations (1) to (3), the piston ring has a perimeter which becomes longer in a tilted state in which the piston is tilted with respect to the axial direction than in a non-tilted state in which the piston is along the axial direction of the cylinder.

With the above configuration (4), the perimeter of the piston ring is longer when the piston is in the tilted state than when the piston is in the non-tilted state, and thus it is possible to incline the seal line in accordance with tilting of the piston to reduce a side force while maintaining the sealing performance.

(5) In the hydraulic machine according to the present invention the piston ring is configured to be deformable so that a shape of the seal line changes between a circular shape in the non-tilted state and an oval shape in the tilted state.

With the above configuration (5), the piston ring is deformable in accordance with inclination of the seal line in accordance with tilting of the piston, and thus it is possible to incline the seal line in accordance with tilting of the piston to reduce a side force while maintaining the sealing performance.

(6) In some embodiments, in any one of the above configurations (1) to (5), the piston ring is made from resin.

With the above configuration (6), since the piston ring is formed from resin, which generally has a low Young's modulus, the piston ring is more deformable in accordance with inclination of the seal line accompanying tilting of the piston, and thus it is possible to incline the seal line in accordance with tilting of the piston to reduce a side force while maintaining the sealing performance.

(7) In some embodiments, in any one of the above configurations (1) to (5), the piston ring is made from metal.

With the above configuration (7), since the piston ring is formed from metal, it is possible to suppress wear of the piston ring.

(8) According to the present invention the hydraulic machine further comprises a biasing member configured to push the piston ring outward in a radial direction.

With the above configuration (8), the biasing member pushes the piston ring outward in accordance with inclination of the seal line accompanying tilting of the piston so that the perimeter of the piston ring expands, and thus it is possible to incline the seal line in accordance with tilting of the piston to reduce a side force while maintaining the sealing performance.

(9) In some embodiments, in any one of the above configurations (1) to (8), the piston ring has a butting section at which a first end portion and a second end portion of the piston ring in a circumferential direction of the piston ring are in engagement with each other.

With the above configuration (9), the diameter of the piston ring starts to increase in accordance with inclination of the seal line accompanying tilting of the piston so that the perimeter of the piston ring expands, and thus it is possible to incline the seal line in accordance with tilting of the piston to reduce a side force while maintaining the sealing performance.

(10) In some embodiments, in the above configuration (9), the butting section is configured such that the first end portion and the second end portion are in contact with each other in a radial direction of the piston ring, and the first end portion and the second end portion are in contact with each other in a direction along a center axis of the piston ring.

With the above configuration (10), the first end portion and the second end portion in the circumferential direction of the piston ring can make contact with each other at the butting section, with respect to both of the radial direction and the axial direction of the piston ring, and thus it is possible to improve the sealing performance at the butting section.

(11) In some embodiments, in any one of the above configurations (1) to (10), the piston ring has an outer shape of a curved shape having a curvature radius smaller than that of a curved shape of the outer peripheral surface of the piston head, in a cross section taken along the axial direction.

With the above configuration (11), since the piston ring has a curved outer shape having a curvature radius smaller than that of the curved outer shape of the outer peripheral surface of the piston head, the seal line can be appropriately inclined in accordance with tilting of the piston.

(12) In some embodiments, in any one of the above configurations (1) to (10), the piston ring has a slide-contact surface extending along the axial direction.

With the above configuration (12), since the piston ring has a slide-contact surface extending along the axial direction of the cylinder, when the seal line is inclined in accordance with tilting of the piston, the edge portion within the slide-contact surface on the side of the working chamber is always the seal position, regardless of the inclination angle of the piston, and thereby it is possible to incline the seal line appropriately in accordance with tilting of the piston. Accordingly, it is possible to reduce a side force effectively.

(13) In some embodiments, in any one of the above configurations (1) to (12), the piston ring has a thickness "t" satisfying a relationship $0.5 \times R\sin\theta_{max} \leq t \leq 1.5 \times R\sin\theta_{max}$, where R is an inner diameter of the cylinder and $\theta_{max}$ is a maximum tilt angle of the piston with respect to the axial direction.

The center position of the piston ring in the thickness direction changes in the axial direction by $R\sin\theta_{max}$ when the piston is tilting the most, as compared to when the piston is in a non-tilted state.

In this regard, with the above configuration, the thickness "t" of the piston ring is set in an appropriate range with respect to $R\sin\theta_{max}$, and thereby it is possible to incline the seal line in accordance with tilting of the piston to reduce a side force regardless of the tilt angle of the piston, while maintaining the sealing performance.

(14) In some embodiments, in any one of the above configurations (1) to (13), the seal line of the piston ring is formed by an edge portion of the outer peripheral surface of the piston ring, the edge portion being disposed on a side of a working chamber formed by the piston head and the cylinder, regardless of a tilt angle of the piston with respect to the axial direction.

With the above configuration (14), when the seal line is inclined in accordance with tilting of the piston, the edge portion within the slide-contact surface on the side of the working chamber is always the seal position, regardless of the tilt angle of the piston, and thereby it is possible to incline the seal line appropriately in accordance with tilting of the piston. Accordingly, it is possible to reduce a side force effectively.

(15) A wind turbine power generating apparatus according to the present invention comprises the features of claim 13. The wind turbine power generating apparatus including a wind turbine rotor; a hydraulic pump configured to be driven by the wind turbine rotor; a hydraulic motor configured to be driven by pressurized oil supplied from the hydraulic pump; a generator configured to be driven by the hydraulic motor; and wherein at least one of the hydraulic pump or the hydraulic motor is the hydraulic machine according to the invention.

With the above configuration (15), as described above, the wind turbine power generating apparatus is provided with a hydraulic machine whereby it is possible to reduce the side force from the piston applied to the inner peripheral surface of the cylinder, and to realize smooth operation, and thus the wind turbine power generating apparatus has a high reliability.

According to the present invention, the tilt angle formed between the seal line, formed between the piston head and the cylinder by the piston ring, and the plane orthogonal to the axial direction of the cylinder, changes in accordance with tilting of the piston, and thereby it is possible to reduce a side force from the piston applied to the inner peripheral surface of the cylinder, and to realize smooth operation of the hydraulic machine.

BRIEF DESCRIPTION OF DRAWINGS

FIG. 1 is a schematic overall configuration diagram of a wind turbine power generating apparatus according to an embodiment.

FIG. 2 is a cross-sectional view of a hydraulic machine (hydraulic motor) according to an embodiment.

FIG. 3A is a diagram of a piston and a piston ring in a non-tilted state according to an embodiment. FIG. 3B is a diagram of a piston and a piston ring in a tilted state according to an embodiment.

FIG. 4A is a partial cross-sectional view of a piston according to an embodiment. FIG. 4B is a partial cross-sectional view of a piston according to a comparative example.

FIG. 5 is an enlarged cross-sectional view of a piston head and a piston ring according to an embodiment.

FIG. 6 is a graph showing a relationship between a tilt angle of a piston and an expansion rate of a perimeter L of a piston ring.

FIG. 7 is a cross-sectional view of a piston head according to the present invention.

FIG. 8A is a partial perspective view of a piston ring according to an embodiment. FIG. 8B is a cross-sectional view of FIG. 8A, taken along line A-A.

FIG. 9A is a cross-sectional view of a piston ring in a natural state, according to an embodiment. FIG. 9B is a cross-sectional view of a piston ring in a tilted state, according to an embodiment

FIG. 10A is a cross-sectional view of a piston ring in a natural state, according to another embodiment. FIG. 10B is a cross-sectional view of a piston ring in a tilted state, according to another embodiment.

DETAILED DESCRIPTION

Embodiments of the present invention will now be described in detail with reference to the accompanying drawings. It is intended, however, that unless particularly specified, dimensions, materials, shapes, relative positions and the like of components described in the embodiments shall be interpreted as illustrative only and not intended to limit the scope of the present invention.

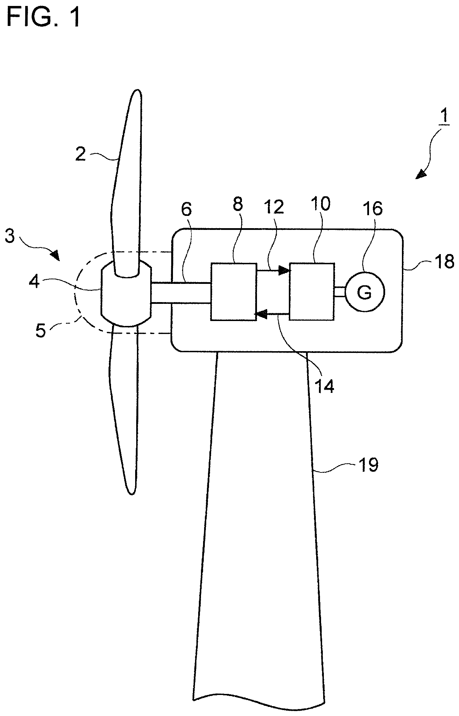

Firstly, with reference to FIG. 1, a wind turbine power generating apparatus 1 will be described as an example of application of a hydraulic machine 10 (hydraulic motor in the depicted example) according to some embodiments. Application of the hydraulic machine 10 is not limited to the wind turbine power generating apparatus 1.

FIG. 1 is a diagram of a wind turbine power generating apparatus according to an embodiment.

The wind turbine power generating apparatus 1 according to some embodiments includes a wind turbine rotor 3, a hydraulic pump 8 configured to be driven by the wind turbine rotor 3, a hydraulic motor 10 configured to be driven by pressurized oil supplied from the hydraulic pump 8, and a generator 16 configured to be driven by the hydraulic motor.

More specifically, the wind turbine rotor 3 includes at least one blade 2, and a hub 4 covered with a hub cover 5. The hydraulic pump 8 is connected to the wind turbine rotor 3 via a main shaft 6.

At least a part of the main shaft 6 is covered with a nacelle 18 disposed on a tower 19. eccentric cam 28. Specifically, when each of the pistons 22 moves from the top dead center toward the bottom dead center (motoring stroke), working oil introduced from the highpressure oil line 12 (see FIG. 1) to corresponding one of the working chambers 27 pushes the piston 22 downward along the cylinder axis toward the eccentric cam 28. At this time, the eccentric cam 28 is pressed by the pistons 22, and thereby the eccentric cam 28 rotates. When the eccentric cam 28 rotates, the pistons 22 positioned in the vicinity of the bottom dead center are pushed up by the eccentric cam 28, so that the working oil in the working chambers 27 is discharged to the low-pressure oil line 14 (see FIG. 1).

The cyclic reciprocating motion of the pistons 22 causes the rotation shaft 29 connected to the eccentric cam 28 to rotate.

The rotation shaft 29 is connected to the generator 16 depicted in FIG. 1, for instance, and configured to transmit the rotational motion of the rotation shaft 29 to the generator 16 to drive the generator 16.

In the hydraulic motor 10 having the above configuration, each piston 22 sways in accordance with rotation of the eccentric cam 28. Specifically, in accordance with the rotational position of the eccentric cam 28, the angle (tilt angle) $\alpha$ formed by axis $E_2$ of the piston 22 with axis $E_1$ of the corresponding cylinder 21 changes.

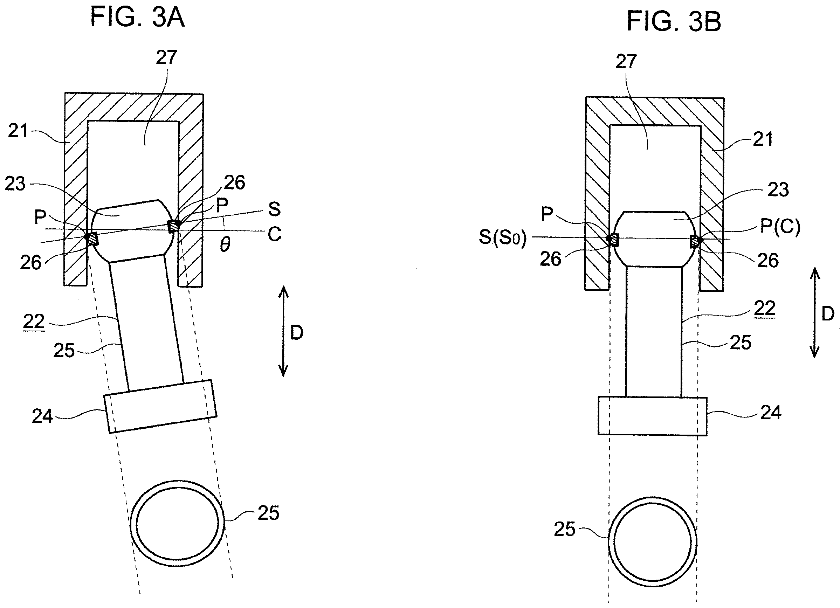

With reference to FIGs. 3A and 3B, the specific configuration of the piston 22 will be described in detail.

FIG. 3A is a diagram of a piston 22 and a piston ring 26 in a non-tilted state according to an embodiment. FIG. 3B is a diagram of a piston 22 and a piston ring 26 in a tilted state according to an embodiment.

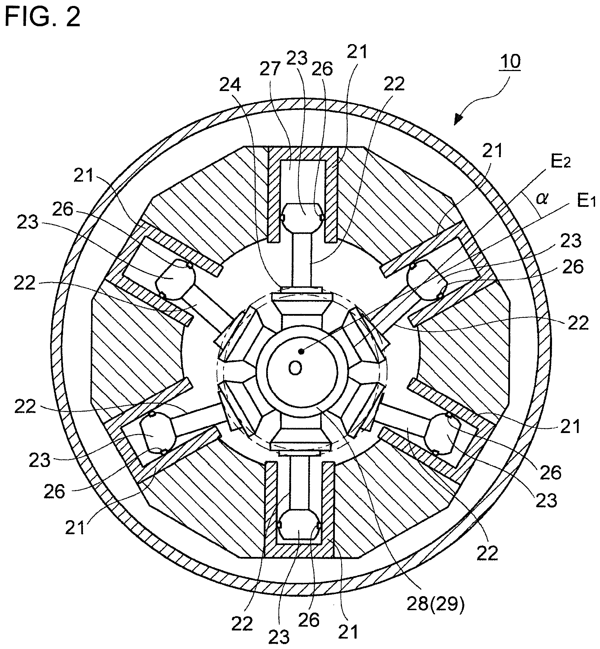

As illustrated in FIGs. 3A and 3B, the piston 22 according to some embodiments includes a piston head 23 disposed on an end portion on the side of the cylinder 21, a root end portion 24 disposed on an end portion on the side of the cam 28 (see FIG. 2), a piston rod 25 disposed between the piston head 23 and the root end portion 24, and a piston ring 26 disposed on the outer peripheral surface of the piston head 23 so as to be in slide contact with the inner peripheral surface of the cylinder 21.

The piston head 23 has an outer peripheral surface curved in a cross section along the axial direction D of the cylinder 21. The outer peripheral surface of the piston head 23 only needs to have a curved portion at least on a surface facing the cylinder 21, and the shape is not limited for other surfaces. For instance, the piston head 23 may be formed into a substantially spherical shape as depicted in FIG. 2, or into a substantially spherical shape having an end surface truncated at the side of the working chamber 27 as depicted in FIGs. 3A and 3B.

The axial direction D of the cylinder 21 is the same direction as the radial direction of the hydraulic motor 10 depicted in FIG. 2.

The piston ring 26 is configured such that a seal line S is formed by the piston ring 26 between the piston head 23 and the cylinder 21, and the angle $\theta$ formed by the seal line S with the plane C orthogonal to the axial direction D of the cylinder 21 (hereinafter, referred to as a tilt angle) changes in accordance with tilting of the piston 22. Specifically, the seal line S is a line passing through an end portion P on the side of the working chamber 27, on a slide contact surface between the outer peripheral surface of the piston ring 26 and the inner peripheral surface of the cylinder 21.

The piston ring 26 may be disposed so as to fit in an annular groove formed on the outer peripheral surface of the piston head 23. Furthermore, the piston ring 26 may be disposed in a plane orthogonal to the axis $E_2$ (see FIG. 2) of the piston 22. Still further, the piston ring 26 may have an outer shape with a groove so as to reduce a pressure of contact surface between the piston ring 26 and the inner peripheral surface of the cylinder 21.

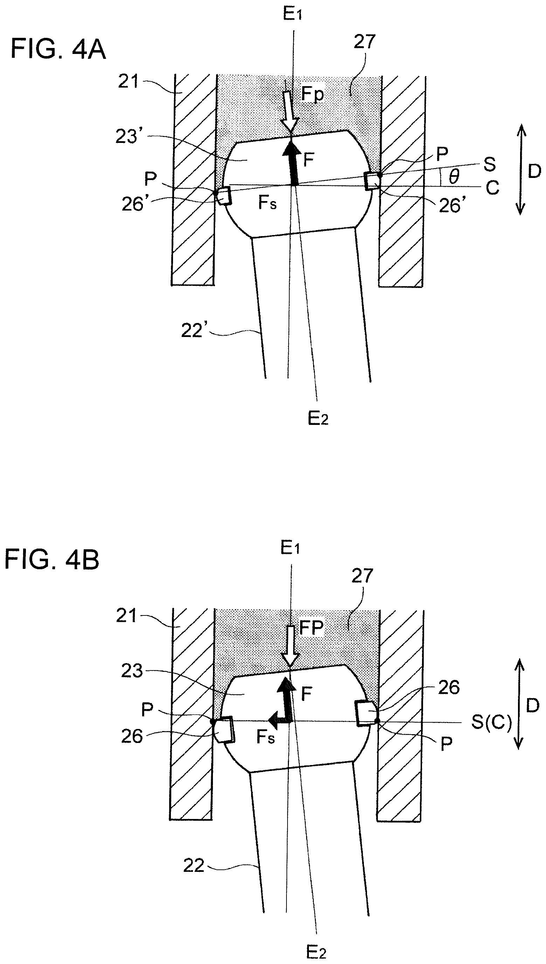

With reference to FIGs. 4A and 4B, the function of the hydraulic machine 10 having the above configuration will be described. FIG. 4A is a partial cross-sectional view of a piston 22 and a cylinder 21 according to an embodiment. FIG. 4B is a partial cross-sectional view of a piston 22' according to a comparative example.

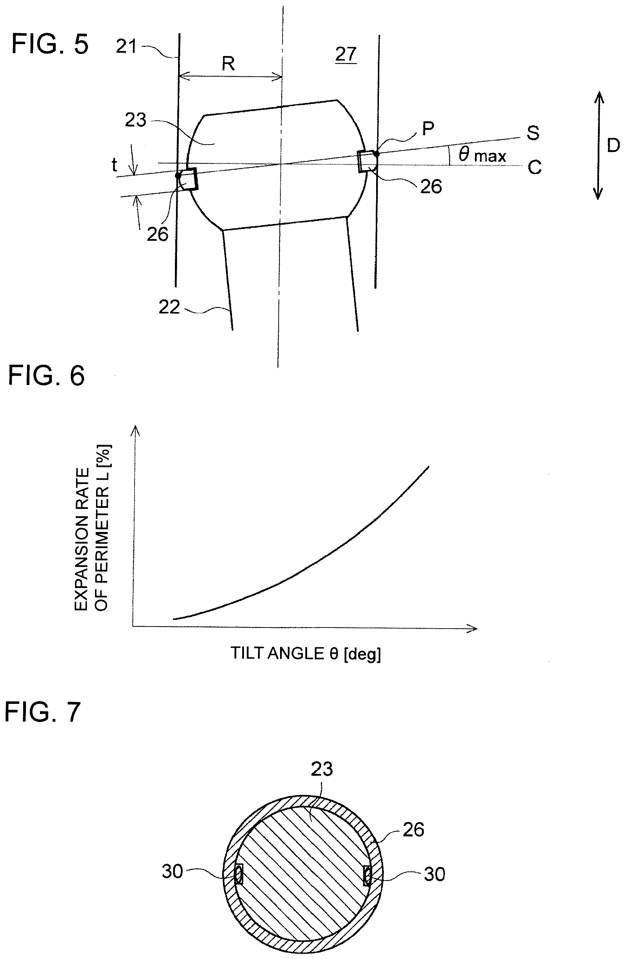

As depicted in FIG. 4B, the piston 22' is pressed in the direction of the axis $E_1$ of the cylinder 21 at a hydraulic pressure force $F_p$, due to the hydraulic pressure of the working chamber 27. On the other hand, for the piston 22', a force F due to a reaction force from a hydrostatic pad portion between a root end portion of the piston 22' and a cam surface is generated so as to make a balance with the hydraulic pressure force $F_p$. Since the axis $E_2$ of the piston 22' is inclined from the axis $E_1$ of the cylinder, the force F is generated along the direction of the axis $E_2$ of the piston 22', and thus a side force $F_S$ is generated from the piston 22' in the horizontal direction with respect to the inner peripheral surface of the cylinder 21. In the comparative example depicted in FIG. 5, the seal line S' between the piston head 23' and the cylinder 21 formed by the piston ring 26' is formed along the plane C orthogonal to the axis $E_1$ of the cylinder 21 regardless of tilting of the piston 22'. In this case, there is substantially no force opposite to the side force $F_S$, and thus the side force $F_S$ has a great influence on the hydraulic machine 10 (see FIG. 2).

In contrast, according to the embodiment depicted in FIG. 4A, the piston ring 26 is configured such that the tilt angle $\theta$ formed by the seal line S between the piston head 23 and the cylinder 21 formed by the piston ring 26 with the plane C orthogonal to the axial direction of the cylinder 21 changes in accordance with tilting of the piston 22. Thus, with the seal line S being inclined in accordance with tilting of the piston 22, it is possible to bring the direction of the hydraulic pressure force $F_p$ applied to the piston head 23 due to the hydraulic pressure in the working chamber 27 closer to the direction of a force F transmitted to the piston head 23 from the cam 28 (see FIG. 2). In this way, it is possible to reduce the side force $F_S$ applied from the piston 22 to the inner peripheral surface of the cylinder 21, and to realize smooth operation of the hydraulic machine 10 (see FIG. 2).

The hydraulic machine 10 with the above configuration may further include the following configuration.

FIG. 5 is an enlarged cross-sectional view of the piston head 23 and the piston ring 26.

With reference to FIG. 5, the perimeter L of the piston ring 26 may be longer than the perimeter of the inner peripheral surface of the cylinder 21.

In some cases, a desirable perimeter of the seal line S for reducing a side force upon tilting of the piston 22 may be longer than the perimeter of the inner peripheral surface of the cylinder 21.

Thus, with the perimeter L of the piston ring 26 in a natural state being set to be longer than the perimeter of the inner peripheral surface of the cylinder 21, it is possible to seal a gap between the outer peripheral surface of the piston 22 and the inner peripheral surface of the cylinder 21 with the piston ring 26 appropriately upon tilting of the piston 22.

For instance, the perimeter L of the piston ring 26 in a natural state satisfies a relationship $0.99L^* \le L \le 1.2L^*$, where R is the inner diameter of the cylinder 21, $\theta_{max}$ is the maximum tilt angle of the piston 22 with respect to the axial direction, and L* is the reference perimeter expressed by the following expression (1).

(Expression 1)

$$L^* = \pi R \times \left(1 + \frac{1}{\cos\theta_{max}}\right) \times \left(1 + \frac{3\left(\frac{\frac{1}{\cos\theta_{max}}-1}{\frac{1}{\cos\theta_{max}}+1}\right)^2}{10 + \sqrt{4 - 3\left(\frac{\frac{1}{\cos\theta_{max}}-1}{\frac{1}{\cos\theta_{max}}+1}\right)^2}}\right) \quad (1)$$

In the expression (1), the reference perimeter L* is the perimeter L' of the seal line S when $\theta_{max}$ is the maximum tilt angle of the piston 22 with respect to the axial direction. Furthermore, the perimeter L' of the inner peripheral surface of the cylinder 21 is expressed by the following approximate expression (2) of an oval, where "a" is the longer diameter and "b" is the shorter diameter.

(Expression 2)

$$L' \approx \pi(a + b) \times \left(1 + \frac{3\left(\frac{a-b}{a+b}\right)^2}{10 + \sqrt{4 - 3\left(\frac{a-b}{a+b}\right)^2}}\right) \quad (2)$$

In a state where the piston 22 is tilting the most, when the seal line S is inclined so as not to generate a side force, the seal line S has an oval shape, and the perimeter of the seal line S is expressed by L*. Thus, when the piston 22 is tilting the most, it is desirable for the piston ring 26 to have a perimeter close to L*, in terms of maintenance of the sealing performance.

With the above configuration, with the perimeter L of the piston ring 26 in a natural state being set to 0.99L* or more, it is possible to seal a gap between the piston 22 and the cylinder 21 appropriately even if the seal line S is inclined in response to tilting of the piston 22.

Furthermore, as described above, with the perimeter L of the piston ring 26 in a natural state being set to 1.2L* or less, it is possible to prevent excessive contraction of the piston ring 26 while the piston 22 is not tilting, and to suppress wear of the piston ring 26.

Furthermore, the piston ring 26 may be configured such that the perimeter L expands more in a tilted state (see FIG. 3B) in which the piston 22 is tilting with respect to the axial direction D, than in a non-tilted state (see FIG. 3A) in which the piston 22 is along the axial direction D of the cylinder 21. For instance, as depicted in FIG. 6, the piston ring 26 may be configured such that the expansion rate of the perimeter L of the piston ring 26 changes in accordance with the tilt angle $\theta$ of the piston 22. FIG. 6 is a graph showing a relationship between a tilt angle of the piston 22 and an expansion rate of the perimeter L of the piston ring 26.

Accordingly, the perimeter L of the piston ring 26 is longer when the piston 22 is in the tilted state than when the piston 22 is in the non-tilted state, and thus it is possible to incline the seal line S in accordance with tilting of the piston 22 to reduce a side force while maintaining the sealing performance.

In this case, the piston ring 26 may be configured deformable so that the shape of the seal line S changes between a circular shape in the non-tilted state (see the bottom figure in FIG. 3A) and an oval shape in the tilted state (see the bottom figure in FIG. 3B).

Accordingly, the piston ring 26 is deformable in accordance with inclination of the seal line S in accordance with tilting of the piston 22, and thus it is possible to incline the seal line S in accordance with tilting of the piston 22 to reduce a side force while maintaining the sealing performance.

With reference to FIG. 5, the thickness "t" of the piston ring 26 may satisfy a relationship $0.5 \times R\sin\theta_{max} \leq t \leq 1.5 \times R\sin\theta_{max}$, provided that R is the inner diameter of the cylinder 21 and $\theta_{max}$ is the maximum tilt angle of the piston with respect to the axial direction.

The center position of the piston ring 26 in the thickness direction changes in the axial direction by $R\sin\theta_{max}$ when the piston 22 is tilting the most, as compared to when the piston 22 is in a non-tilted state.

In this regard, with the above configuration, the thickness "t" of the piston ring 26 is set in an appropriate range with respect to $R\sin\theta_{max}$, and thereby it is possible to incline the seal line S in accordance with tilting of the piston 22 to reduce a side force regardless of the tilt angle $\theta$ of the piston 22, while maintaining the sealing performance.

In an embodiment, the piston ring 26 is formed from resin.

With the piston ring 26 being formed from resin, which generally has a low Young's modulus, the piston ring 26 is more deformable in accordance with inclination of the seal line S accompanying tilting of the piston 22, and thus it is possible to incline the seal line S in accordance with tilting of the piston 22 to reduce a side force while maintaining the sealing performance.

In another embodiment, the piston ring 26 is formed from metal.

With the piston ring 26 being formed from metal, it is possible to suppress wear of the piston ring 26.

FIG. 7 is a cross-sectional view of the piston head 23 according to the present invention. The drawing is a cross section orthogonal to the axial direction of the piston 22.

According to the present invention depicted in FIG. 7, a biasing member 30 configured to push the piston ring 26 outward in the radial direction of the piston ring 26 is provided. For instance, the biasing member 30 is disposed between the inner peripheral surface of the piston ring 26 and the outer peripheral surface of the piston head 23. Furthermore, the biasing member 30 is disposed on a portion where the seal line S expands and contracts in response to tilting of the piston 22.

With the above configuration, the biasing member 30 pushes the piston ring 26 outward in accordance with inclination of the seal line S accompanying tilting of the piston 22 so that the perimeter L of the piston ring 26 expands, and thus it is possible to incline the seal line S in accordance with tilting of the piston 22 to reduce a side force while maintaining the sealing performance.

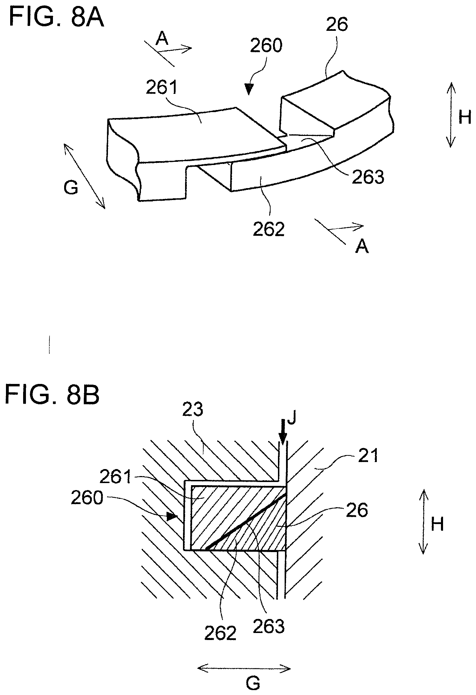

FIG. 8A is a partial perspective view of the piston ring 26 according to an embodiment. FIG. 8B is a cross-sectional view of FIG. 8A, taken along line A-A.

In the embodiment depicted in FIGs. 8A and 8B, the piston ring 26 has a butting section 260 where a first end portion 261 of the piston ring 26 in the circumferential direction engages with a second end portion 262.

In this case, the butting section 260 may be configured such that the first end portion 261 and the second end portion 262 are in contact in a radial direction G of the piston ring 26, and the first end portion 261 and the second end portion 262 are in contact also in a direction H along the center axis of the piston ring 26.

For instance, the piston ring 26 is formed so that the first end portion 261 and the second end portion 262 each have a stepped shape. Furthermore, a contact plane 263 between the first end portion 261 and the second end portion 262 is inclined from the radial direction G of the piston ring 26 and from the direction H along the center axis of the piston ring 26. With this configuration, even if pressurized oil flows toward the contact plane 263 in the direction of arrow J in FIG. 8B from the working chamber 27 (see FIG. 3), the hydraulic pressure of the pressurized oil presses the first end portion 261 against the second end portion 262 at the contact plane 263, which prevents leakage of the pressurized oil.

With the above configuration, the diameter of the piston ring 26 starts to increase in accordance with inclination of the seal line S accompanying tilting of the piston 22 so that the perimeter L of the piston ring 26 expands, and thus it is possible to incline the seal line S in accordance with tilting of the piston 22 to reduce a side force while maintaining the sealing performance.

Furthermore, the first end portion 261 and the second end portion 262 in the circumferential direction of the piston ring 26 can make contact with each other at the butting section 260, with respect to both of the radial direction and the axial direction of the piston ring 26, and thus it is possible to improve the sealing performance at the butting section 260.

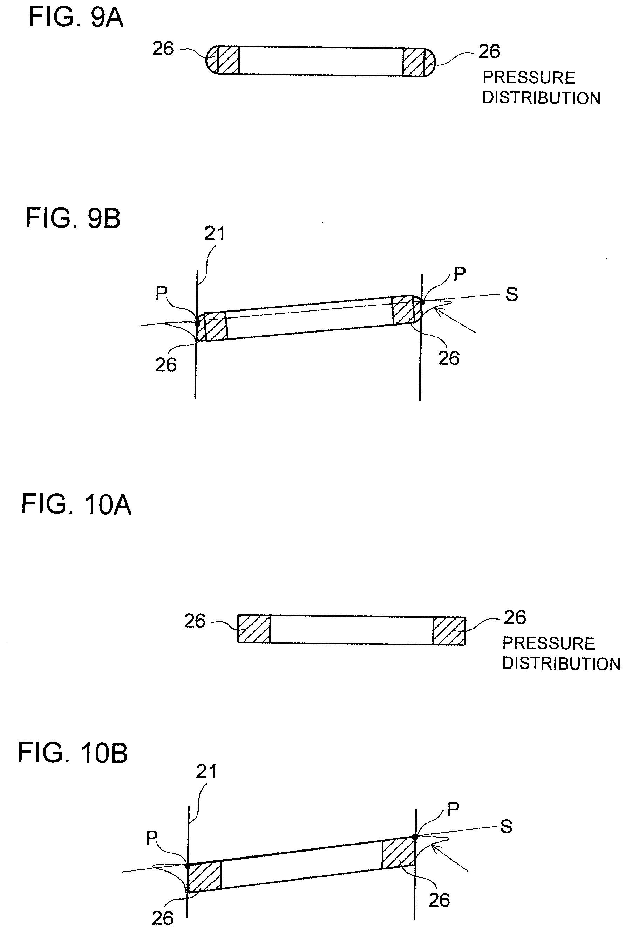

FIG. 9A is a cross-sectional view of the piston ring 26 in a natural state, according to an embodiment. FIG. 9B is a cross-sectional view of the piston ring 26 in a tilted state, according to an embodiment.

In the embodiment depicted in FIGs. 9A and 9B, the piston ring 26 has a curved outer shape with a curvature radius smaller than that of a curved shape of the outer peripheral surface of the piston head 23, in a cross section along the axial direction.

Accordingly, when the piston 22 is tilted, the piston ring 26 is in pressure contact with the inner peripheral surface of the cylinder 21 at a portion of the piston ring 26 having the curved outer shape with a small curvature radius, and the pressure increases at this portion (see FIG. 9B). Thus, it is possible to form the seal line S at this portion, and to incline the seal line S appropriately in accordance with tilting of the piston 22.

FIG. 10A is a cross-sectional view of the piston ring 26 in a natural state, according to another embodiment. FIG. 10B is a cross-sectional view of the piston ring 26 in a tilted state, according to another embodiment.

In the embodiment depicted in FIGs. 10A and 10B, the piston ring 26 has a slide-contact surface extending along the axial direction. For instance, the piston ring 26 may have a cylindrical shape.

Accordingly, the piston ring 26 deforms in accordance with tilting of the piston 22, and the pressure at an edge portion of the slide-contact surface of the piston ring 26 on the side of the working chamber 27 increases (see FIG. 9B), and the seal line S is formed at this end portion. Thus, regardless of the tilt angle $\theta$ of the piston 22, the edge portion within the slide-contact surface on the side of the working chamber 27 is always the seal position, and thereby it is possible to incline the seal line S appropriately in accordance with tilting of the piston 22. Accordingly, it is possible to reduce a side force effectively.

Furthermore, as depicted in FIG. 10A or 10B, the seal line S of the piston ring 26 may be formed by an edge portion on the side of the working chamber 27 formed by the piston head 23 and the cylinder 21, on the outer peripheral surface of the piston ring 26, regardless of the tilt angle θ of the piston 22 with respect to the axial direction D.

Accordingly, when the seal line S is inclined in accordance with tilting of the piston 22, the edge portion within the slide-contact surface on the side of the working chamber 27 is always the seal position, regardless of the inclination angle θ of the piston 22, and thereby it is possible to incline the seal line S appropriately in accordance with tilting of the piston 22. Accordingly, it is possible to reduce a side force effectively.

As described above, according to at least some embodiments of the present invention, the angle θ formed by the seal line S between the piston head 23 and the cylinder 21 formed by the piston ring 26 with the plane orthogonal to the axial direction D of the cylinder 21 changes in accordance with tilting of the piston 22, and thereby it is possible to reduce a side force from the piston 22 applied to the inner peripheral surface of the cylinder 21, and to realize smooth operation of the hydraulic machine 10.

Embodiments of the present invention were described in detail above, but the present invention is not limited thereto, and various amendments and modifications may be implemented.

For instance, an expression of relative or absolute arrangement such as "in a direction", "along a direction", "parallel", "orthogonal", "centered", "concentric" and "coaxial" shall not be construed as indicating only the arrangement in a strict literal sense, but also includes a state where the arrangement is relatively displaced by a tolerance, or by an angle or a distance whereby it is possible to achieve the same function.

For instance, an expression of an equal state such as "same" "equal" and "uniform" shall not be construed as indicating only the state in which the feature is strictly equal, but also includes a state in which there is a tolerance or a difference that can still achieve the same function.

Further, for instance, an expression of a shape such as a rectangular shape or a cylindrical shape shall not be construed as only the geometrically strict shape, but also includes a shape with unevenness or chamfered corners within the range in which the same effect can be achieved.

On the other hand, an expression such as "comprise", "include", "have", "contain" and "constitute" are not intended to be exclusive of other components.

**Claims**

1. A hydraulic machine (10), comprising:

   a cylinder (21) disposed along a radial direction of the hydraulic machine (10);
   a piston (22) including a piston head (23) having an outer peripheral surface curved in a cross section taken along an axial direction (D) of the cylinder (21), the piston (22) being configured to reciprocate inside the cylinder (21);
   a cam (28) configured to engage with a root end portion (24) of the piston (22) and to rotate in connection with a reciprocating motion of the piston (22);
   a piston ring (26) disposed on the outer peripheral surface of the piston head (23) so as to be in slide contact with an inner peripheral surface of the cylinder (21),
   wherein the piston ring (26) is configured to be deformable so that a shape of a seal line (S), which is formed between the piston head (23) and the cylinder (21) by the piston ring (26), changes between a circular shape in the non-tilted state and an oval shape in the tilted state and an angle formed by the seal line (S) with a plane orthogonal to the axial direction (D) of the cylinder (21) is variable in accordance with tilting of the piston (22); and
   a biasing member (30) configured to push the piston ring (26) outward in a radial direction, **characterised in that** the biasing member (30) is disposed on the piston head (23) only on portions opposite to each other with respect to a major axis of the oval shape of the seal line (S), and
   wherein the biasing member (30) is not disposed on the piston head (23) on portions opposite to each other with respect to a minor axis of the oval shape of the seal line (S).

2. The hydraulic machine (10) according to claim 1,
   wherein the piston ring (26) has a perimeter longer than a perimeter of the inner peripheral surface of the cylinder (21).

3. The hydraulic machine (10) according to claim 2,
   wherein the perimeter L of the piston ring (26) in a natural state satisfies a relationship $0.99L^* \leq L \leq 1.2L^*$, where R is an inner diameter of the cylinder (21), $\theta_{max}$ is a maximum tilt angle of the piston (22) with respect to the axial direction, and L* is a reference perimeter expressed by following expression (1):

$$L^* = \pi R \times \left(1 + \frac{1}{\cos\theta_{max}}\right) \times \left(1 + \frac{3\left(\frac{\frac{1}{\cos\theta_{max}}-1}{\frac{1}{\cos\theta_{max}}+1}\right)^2}{10 + \sqrt{\left|4 - 3\left(\frac{\frac{1}{\cos\theta_{max}}-1}{\frac{1}{\cos\theta_{max}}+1}\right)^2\right|}}\right) \quad (1)$$

4. The hydraulic machine (10) according to any one of claims 1 to 3,
wherein the piston ring (26) has a/the perimeter L which becomes longer in a tilted state in which the piston (22) is tilted with respect to the axial direction (D) of the cylinder (21) than in a non-tilted state in which the piston (22) is along the axial direction (D).

5. The hydraulic machine (10) according to any one of claims 1 to 4,
wherein the piston ring (26) is made from resin.

6. The hydraulic machine (10) according to any one of claims 1 to 4,
wherein the piston ring (26) is made from metal.

7. The hydraulic machine (10) according to any one of claims 1 to 6,
wherein the piston ring (26) has a butting section (260) at which a first end portion (261) and a second end portion (262) of the piston ring (26) in a circumferential direction of the piston ring (26) are in engagement with each other.

8. The hydraulic machine (10) according to claim 7,
wherein the butting section (260) is configured such that the first end portion (261) and the second end portion (262) are in contact with each other in a radial direction (G) of the piston ring (26), and the first end portion (261) and the second end portion (262) are in contact with each other in a direction along a center axis of the piston ring (26).

9. The hydraulic machine (10) according to any one of claims 1 to 8,
wherein the piston ring (26) has an outer shape of a curved shape having a curvature radius smaller than that of a curved shape of the outer peripheral surface of the piston head (23), in a cross section taken along the axial direction (D).

10. The hydraulic machine (10) according to any one of claims 1 to 8,
wherein the piston ring (26) has a slide-contact surface extending along the axial direction (D).

11. The hydraulic machine (10) according to any one of claims 1 to 10,
wherein the piston ring (26) has a thickness "t" satisfying a relationship $0.5 \times R\sin\theta_{max} \leq t \leq 1.5 \times R\sin\theta_{max}$, where R is an inner diameter of the cylinder (21) and $\theta_{max}$ is a maximum tilt angle of the piston (22) with respect to the axial direction (D).

12. The hydraulic machine (10) according to any one of claims 1 to 11,
wherein the seal line (S) of the piston ring (26) is formed by an edge portion of the outer peripheral surface of the piston ring (26), the edge portion being disposed on a side of a working chamber (27) formed by the piston head (23) and the cylinder (21), regardless of a tilt angle of the piston (22) with respect to the axial direction (D).

13. A wind turbine power generating apparatus (1), comprising:

a wind turbine rotor (3);
a hydraulic pump (8) configured to be driven by the wind turbine rotor (3);
a hydraulic motor (10) configured to be driven by pressurized oil supplied from the hydraulic pump (8); and
a generator (16) configured to be driven by the hydraulic motor (10),
wherein at least one of the hydraulic pump (8) or the hydraulic motor (10) is the hydraulic machine (10) according to any one of claims 1 to 12.

**Patentansprüche**

1. Eine hydraulische Maschine (10) mit:

   einem Zylinder (21), der entlang einer Radialrichtung der hydraulischen Maschine (10) angeordnet ist,
   einem Kolben (22) mit einem Kolbenkopf (23), der eine Außenumfangsoberfläche besitzt, die in einem Querschnitt entlang einer Axialrichtung (D) des Zylinders (21) gekrümmt ist, wobei der Kolben (22) konfiguriert ist, um im Inneren des Zylinders (21) hin- und herzugehen,
   einer Steuerkurve (28), die konfiguriert ist, um mit einem Fußendabschnitt (24) des Kolbens (22) in Eingriff zu gelangen und um in Verbindung mit einer Hin- und Herbewegung des Kolbens (22) zu rotieren,
   einem Kolbenring (26), der an der Außenumfangsoberfläche des Kolbenkopfs (23) so angeordnet ist, dass er sich in einem Gleitkontakt mit einer innen Umfangsoberfläche des Zylinders (21) befindet,
   wobei der Kolbenring (26) konfiguriert ist, um so verformbar zu sein, dass eine Form einer Dichtungslinie (S), die zwischen dem Kolbenkopf (23) und dem Zylinder (21) durch den Kolbenring (26) gebildet ist, sich zwischen einer Kreisform in einem nicht-gekippten Zustand und einer Ovalform in dem gekippten Zustand ändert, und ein durch die Dichtungslinie (S) mit einer Ebene orthogonal zu der Axialrichtung (D) des Zylinders (21) gebildeter Winkel gemäß dem Kippen des Kolbens (22) variabel ist, und
   einem Vorbelastungselement (30), das konfiguriert ist, um den Kolbenring (26) in einer Radialrichtung auswärts zu drücken,
   **dadurch gekennzeichnet, dass**
   das Vorbelastungselement (30) an dem Kolbenkopf (23) nur an Abschnitten angeordnet sind, die einander bezüglich einer Hauptachse der Ovalform der Dichtungslinie (S) gegenüberliegen,
   wobei das Vorbelastungselement (30) nicht an dem Kolbenkopf (23) an einander bezüglich einer Nebenachse der Ovalform der Dichtungslinie (S) gegenüberliegenden Abschnitten angeordnet ist.

2. Die hydraulische Maschine (10) gemäß Anspruch 1,
   wobei der Kolbenring (26) einen Umfang besitzt, der länger ist als ein Umfang der innen Umfangsoberfläche des Zylinders (21).

3. Die hydraulische Maschine (10) gemäß Anspruch 2,
   wobei der Umfang L des Kolbenrings (26) in einem natürlichen Zustand eine Beziehung $0,99L^* \leq L \leq 1.2L^*$ erfüllt, wobei R ein Innendurchmesser des Zylinders (21), $\theta_{max}$ ein maximaler Kippwinkel des Kolbens (22) bezüglich der Axialrichtung ist, und L* ein Referenzumfang ist, der durch den folgenden Ausdruck (1) angegeben ist:

$$L^* = \pi R \times \left(1 + \frac{1}{\cos\theta_{max}}\right) \times \left(1 + \frac{3\left(\frac{\frac{1}{\cos\theta_{max}}-1}{\frac{1}{\cos\theta_{max}}+1}\right)^2}{10 + \sqrt{4 - 3\left(\frac{\frac{1}{\cos\theta_{max}}-1}{\frac{1}{\cos\theta_{max}}+1}\right)^2}}\right) \quad (1)$$

4. Die hydraulische Maschine (10) gemäß einem der Ansprüche 1 bis 3,
   wobei der Kolbenring (26) einen/den Umfang L besitzt, der in einem gekippten Zustand, in dem der Kolben (22) bezüglich der Axialrichtung (D) des Zylinders (21) gekippt ist, länger ist als in einem nicht-gekippten Zustand, in dem der Kolben (22) sich entlang der Axialrichtung (D) befindet.

5. Die hydraulische Maschine (10) gemäß einen der Ansprüche 1 bis 4,
   wobei der Kolbenring (26) aus Harz gemacht ist.

6. Die hydraulische Maschine (10) gemäß einen der Ansprüche 1 bis 4,
   wobei der Kolbenring (26) aus Metall gemacht ist.

7. Die hydraulische Maschine (10) gemäß einen der Ansprüche 1 bis 6,
   wobei der Kolbenring (26) einen Anlageabschnitt (260) besitzt, an dem ein erster Endabschnitt (261) und ein zweiter Endabschnitt (262) des Kolbenrings (26) in einer Umfangsrichtung des Kolbenrings (26) in Eingriff miteinander sind.

8. Die hydraulische Maschine (10) gemäß Anspruch 7,
wobei der Anlageabschnitt (260) so konfiguriert ist, dass der erste Endabschnitt (261) und der zweite Endabschnitt (262) in Kontakt miteinander in einer Radialrichtung (G) des Kolbenrings (26) sind, und der erste Endabschnitt (261) und der zweite Endabschnitt (262) in Kontakt miteinander in eine Richtung entlang einer Mittelachse des Kolbenrings (26) sind.

9. Die hydraulische Maschine (10) gemäß einen der Ansprüche 1 bis 8,
wobei der Kolbenring (26) eine Außenform einer gekrümmten Form mit einem Krümmungsradius besitzt, der kleiner ist als der von einer gekrümmten Form der Außenumfangsoberfläche des Kolbenkopfs (23), in einem Querschnitt entlang der Axialrichtung (D).

10. Die hydraulische Maschine (10) gemäß einem der Ansprüche 1 bis 8,
wobei der Kolbenring (26) eine Gleitkontaktoberfläche besitzt, die sich entlang der Axialrichtung (D) erstreckt.

11. Die hydraulische Maschine (10) gemäß einem der Ansprüche 1 bis 10,
wobei der Kolbenring (26) eine Dicke "t" besitzt, die eine Beziehung $0,5 \times R\sin\theta_{max} \leq t \leq 1.5 \times R\sin\theta_{max}$ erfüllt, wobei R ein Innendurchmesser des Zylinders (21) und $\theta_{max}$ ein maximaler Kippwinkel des Kolbens (22) bezüglich der Axialrichtung (D) ist.

12. Die hydraulische Maschine (10) gemäß einem der Ansprüche 1 bis 11,
wobei die Dichtungslinie (S) des Kolbenrings (26) durch einen Randabschnitt der Außenumfangsoberfläche des Kolbenrings (26) gebildet ist, wobei der Randabschnitt an einer Seite einer Arbeitskammer (27) angeordnet ist, die durch den Kolbenkopf (23) und den Zylinder (21) gebildet ist, unabhängig von einen Kippwinkel des Kolbens (22) bezüglich der Axialrichtung (D).

13. Eine Windturbinen-Stromerzeugungsvorrichtung (1) mit:

einem Windturbinenrotor (3),
einer hydraulischen Pumpe (8), die konfiguriert ist, um durch den Windturbinenrotor (3) angetrieben zu werden,
einem hydraulischen Motor (10), der konfiguriert ist, um durch Drucköl, das von der hydraulischen Pumpe (8) zugeführt wird, angetrieben zu werden, und
einem Generator (16), der konfiguriert ist, um durch den hydraulischen Motor (10) angetrieben zu werden,
wobei zumindest einer von der hydraulischen Pumpe (8) oder dem hydraulischen Motor (10) die hydraulische Maschine gemäß einen der Ansprüche 1 bis 12 ist.

**Revendications**

1. Machine (10) hydraulique, comprenant :

un cylindre (21) disposé suivant une direction radiale de la machine (10) hydraulique ;
un piston (22) comprenant une tête (23) de piston ayant une surface périphérique extérieure incurvée dans une section transversale prise suivant une direction (D) axiale du cylindre (21), le piston (22) étant configuré pour aller et venir à l'intérieur du cylindre (21) ;
une came (28) configurée pour coopérer avec une partie (24) d'extrémité de racine du piston (22) et pour tourner en liaison avec un mouvement de va et vient du piston (22) ;
un joint (26) de piston disposé sur la surface périphérique extérieure de la tête (23) du piston de manière à être en contact glissant avec une surface périphérique intérieure du cylindre (21),
le joint (26) de piston étant configuré pour être déformable de manière à ce qu'une ligne (S) de joint, qui est formée entre la tête (23) du piston et le cylindre (21) par le joint (26) de piston, change entre une forme circulaire dans l'état non incliné et une forme ovale dans l'état incliné, et de manière à ce qu'un angle entre la ligne (S) de joint et un plan orthogonal à la direction (D) axiale du cylindre (21) soit variable en fonction de la l'inclinaison du piston (22) ; et
un élément (30) de poussée configuré pour pousser le joint (26) de piston vers l'extérieur, dans une direction radiale, **caractérisée en ce que**
l'élément (30) de poussée est disposé sur la tête (23) du piston seulement sur des parties opposées l'une à l'autre par rapport à un grand axe de la forme ovale de la ligne (S) de joint, et

dans laquelle l'élément (30) de poussée n'est pas disposé sur la tête (23) du piston sur des parties opposées l'une à l'autre par rapport à un petit axe de la forme ovale de la ligne (S) de joint.

2. Machine (10) hydraulique suivant la revendication 1,
dans laquelle le joint (26) de piston a un périmètre plus grand qu'un périmètre de la surface périphérique intérieure du cylindre (21).

3. Machine (10) hydraulique suivant la revendication 2,
dans laquelle le périmètre L du joint (26) de piston dans un état naturel satisfait une relation $0,99L^* \leq L \leq 1,2L^*$, R étant un diamètre inférieur du cylindre (21), $\theta_{max}$ étant un angle d'inclinaison maximum du piston (22) par rapport à la direction axiale, et $L^*$ étant un périmètre de référence exprimé par l'expression (1) suivante :

$$L^* = \pi R \times \left(1 + \frac{1}{\cos \theta_{max}}\right) \times \left(1 + \frac{3\left(\frac{\frac{1}{\cos \theta_{max}} - 1}{\frac{1}{\cos \theta_{max}} + 1}\right)^2}{10 + \sqrt{4 - 3\left(\frac{\frac{1}{\cos \theta_{max}} - 1}{\frac{1}{\cos \theta_{max}} + 1}\right)^2}}\right) \qquad (1)$$

4. Machine (10) hydraulique suivant l'une quelconque des revendications 1 à 3,
dans laquelle le joint (26) de piston a un/le périmètre L qui devient plus grand dans un état incliné, dans lequel le piston (22) est incliné par rapport à la direction (D) axiale du cylindre (21), que dans un état non incliné, dans lequel le piston (22) est suivant la direction (D) axiale.

5. Machine (10) hydraulique suivant l'une quelconque des revendications 1 à 4,
dans laquelle le joint (26) de piston est en résine.

6. Machine (10) hydraulique suivant l'une quelconque des revendications 1 à 4,
dans laquelle le joint (26) de piston est en métal.

7. Machine (10) hydraulique suivant l'une quelconque des revendications 1 à 6,
dans laquelle le joint (26)de piston a une partie (260) d'aboutement où une première partie (261) d'extrémité et une seconde partie (262) d'extrémité du joint (26) de piston, dans une direction circonférentielle du joint (26) de piston, sont en coopération l'une avec l'autre.

8. Machine (10) hydraulique suivant la revendication 7,
dans laquelle la partie (260) d'aboutement est configurée de manière à ce que la première partie (261) d'extrémité et la seconde partie (262) d'extrémité soient en contact l'une avec l'autre dans une direction (G) radiale du joint (26) de piston, et de manière à ce que la première partie (261) d'extrémité et la seconde partie (262) d'extrémité soient en contact l'une avec l'autre dans une direction suivant un axe central du joint (26) de piston.

9. Machine (10) hydraulique suivant l'une quelconque des revendications 1 à 8,
dans laquelle le joint (26) de piston a une forme extérieure d'une forme incurvée ayant un rayon de courbure plus petit que celui d'une forme incurvée de la surface périphérique extérieure de la tête (23) du piston, dans une section transversale prise suivant la direction (D) axiale.

10. Machine (10) hydraulique suivant l'une quelconque des revendications 1 à 8,
dans laquelle le joint (26) de piston a une surface de contact glissant s'étendant suivant la direction (D) axiale.

11. Machine (10) hydraulique suivant l'une quelconque des revendications 1 à 10,
dans laquelle le joint (26) de piston a une épaisseur «t» satisfaisant une relation $0,5 \times R\sin\theta_{max} \leq t \leq 1,5 \times R\sin\theta_{max}$, R étant un diamètre intérieur du cylindre (21) et $\theta_{max}$ étant un angle d'inclinaison maximum du piston (22) avec la direction (D) axiale.

**12.** Machine (10) hydraulique suivant l'une quelconque des revendications 1 à 11, dans laquelle la ligne (S) de joint du joint (26) de piston est formée d'une partie de bord de la surface périphérique extérieure du joint (26) de piston, la partie de bord étant disposée d'un côté d'une chambre (27) de travail formée par la tête (23) du piston et par le cylindre (21), quelque soit un angle d'inclinaison du piston (22) avec la direction (D) axiale.

**13.** Centrale (1) électrique à éolienne, comprenant :

un rotor (3) d'éolienne ;

une pompe (8) hydraulique configurée pour être entraînée par le rotor (3) d'éolienne ;

un moteur (10) hydraulique configuré pour être entraîné par de l'huile sous pression fournie par la pompe (8) hydraulique ; et

une génératrice (16) configurée pour être entraînée par le moteur (10) hydraulique,

dans laquelle au moins l'un de la pompe (8) hydraulique ou du moteur (10) hydraulique est la machine (10) hydraulique suivant l'une quelconque des revendications 1 à 12.

# FIG. 1

## FIG. 2

FIG. 3A

FIG. 3B

FIG. 4A

FIG. 4B

FIG. 5

FIG. 6

TILT ANGLE θ [deg]

FIG. 7

## FIG. 8A

## FIG. 8B

**FIG. 9A**

26     26
PRESSURE
DISTRIBUTION

**FIG. 9B**

21   P   S   P   26   26

**FIG. 10A**

26     26
PRESSURE
DISTRIBUTION

**FIG. 10B**

21   P   S   P   26   26

**EP 3 211 228 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2765310 A
- US 5079994 A
- JP 2521481 B
- JP 2012154260 A
- CH 629286 A5